# EUROPÄISCHE PATENTSCHRIFT

(11) **EP 2 159 683 B1**
(45) Veröffentlichungstag und Bekanntmachung des Hinweises auf die Patenterteilung: **03.10.2018**
(21) Anmeldenummer: 09165473.1
(22) Anmeldetag: 15.07.2009
(51) Int. Cl.: G06F 3/12, B41F 33/00

(54) **VERFAHREN UND VORRICHTUNG ZUR AUFTEILUNG EINES DRUCKAUFTRAGES NACH EIGENSCHAFTEN DER DRUCKPRODUKTE**
METHOD AND APPARATUS FOR SPLITTING A PRINT JOB ACCORDING TO THE CHARACTERISTICS OF THE PRINT PRODUCTS
PROCÉDÉ ET DISPOSITIF POUR RÉPARTIR UNE TÂCHE D'IMPRESSION SELON LES CARACTÉRISTIQUES DES PRODUITS D'IMPRESSION

(30) Priorität: 26.08.2008 DE 102008039661
(43) Veröffentlichungstag der Anmeldung: 03.03.2010
(73) Patentinhaber: Heidelberger Druckmaschinen AG, 69115 Heidelberg (DE)
(72) Erfinder: WEBER, Mathias-Henry, Dr., 24161 Altenholz (DE)

(56) Entgegenhaltungen:
- EP-A- 0 729 090
- US-A1- 2002 186 384
- US-A1- 2005 237 571
- US-A1- 2006 290 979

## Beschreibung

Die vorliegende Erfindung betrifft ein Verfahren zur Erzeugung eines Druckproduktes gemäß eines Druckauftrages, wobei der Druckauftrag wenigstens ein Referenzobjekt umfasst, das selber wenigstens ein Basisobjekt umfassen kann. Hierfür soll wenigstens eine Jobdatei bereitgestellt sein, die Eingangsgrößen umfasst, welche den Basisobjekten und/oder den Referenzobjekten zugeordnet sind und die gewünschte Eigenschaften dieser Referenzobjekte beschreiben.

Des Weiteren betrifft die Erfindung eine Vorrichtung zur Durchführung des beschriebenen Verfahrens.

Zur Erzeugung eines Druckproduktes stehen heutzutage unterschiedlichste Ausgabegeräte bereit. Es handelt sich hierbei um Druckmaschinen, die unterschiedliche Formate an Bedruckstoffen mit unterschiedlicher Grammatur auf verschiedenste Arten bebildern können. Beispielsweise kann es sich bei diesen Ausgabegeräten um Digitaldruckmaschinen oder um herkömmliche Offsetdruckmaschinen handeln. Bei den Digitaldruckmaschinen oder auch bei den Offsetdruckmaschinen kann man noch unterscheiden zwischen Maschinen, die reine schwarz/weiß Drucke erzeugen oder welche, die Farbdrucke erzeugen. Je nach Format und Grammatur des gewünschten Druckproduktes können unterschiedliche Druckmaschinen zur Durchführung des Druckverfahrens vorgesehen sein.

Alle gewünschten Eigenschaften des resultierenden Druckproduktes sind bei einem Druckauftrag innerhalb einer Datei bereitgestellt. Es kann sich hierbei beispielsweise um eine Job-Datei handeln, die explizit nur die gewünschten Eigenschaften des Druckproduktes enthält oder aber auch zusätzlich dazu PDF's umfasst, welche den Inhalt der einzelnen Seiten oder Bogen des Druckauftrages beinhalten. Diese Job-Datei kann dann beispielsweise in Form eines Job-Data-Formats (JDF) hinterlegt sein. Häufig wird diese Information auch als Job-Ticket-Data behandelt, die alle Parameter enthält, die notwendig sind, um den Druckauftrag durchzuführen. In dieser Datei kann auch eine Liste zu einem Speicherort der Bilddaten, z. B. in Form von PDF's, hinterlegt sein.

Bei diesen Daten kann es sich z. B. um Papiergröße aber auch um Finishing-Information für eine weitere Postpress Behandlung des Druckproduktes handeln.

Der Druckauftrag kann beispielsweise über ein Netzwerk oder über ein an die Druckmaschine angeschlossenen Rechner der Druckmaschine übergeben werden. Innerhalb dieses Netzwerkes können auch unterschiedliche Druckmaschinen als Ausgabegeräte zur Verfügung stehen.

Ein Druckauftrag kann dabei unterschiedlichste Arten von Druckprodukten beschreiben. Es kann sich dabei um eine Broschüre, einen Katalog, eine Zeitung, ein Buch oder ähnliches handeln. Je nach gewünschtem Druckprodukt kann der Druckauftrag dabei unterschiedlichste Bogen von Druckvorlagen umfassen. Diese Druckvorlagen können dafür vorgesehen sein, dass sie in Farbe oder schwarz/weiß oder mit Sonderfarben gedruckt werden sollen, es kann weiter vorgesehen sein, dass für einzelne Bogen Bedruckstoff mit einer höheren Grammatur vorgesehen ist oder für einige Seiten gestrichenes oder ungestrichenes Papier vorgesehen ist, außerdem können bestimmte Seiten vorgesehen sein, die unterschiedlich zu übrigen Seiten gerastert sind. Es können auch Bogen unterschiedlichen Formats vorgesehen sein.

Alle diese Druckbogen, die unterschiedlichen Anforderungen entsprechen sollen, auf einer einzigen Druckmaschine zu drucken, ist teilweise zeitintensiv und auch teuer. Sind z. B. nur einige wenige farbige Seiten vorgesehen, so müsste der gesamte Druckauftrag an einer Farbdruckmaschine durchgeführt werden. Diese ist dann während des gesamten Druckauftrages für andere Druckaufträge gesperrt. Muss nur ein bestimmter Teil des Druckauftrages mit einem großformatigem Ausgabegerät gedruckt werden, so steht dieses dann während des gesamten Druckauftrages für andere Aufträge nicht mehr zur Verfügung.

Aus der EP 1 229 728 A2 ist es bekannt, einen Druckauftrag nach farbigen und schwarz/weiß beinhaltenden Seiten aufzuspalten. Dieses geschieht mittels eines Rips, der dann anschließend die Druckaufträge für die schwarz/weiß Druckmaschine und für die Farbdruckmaschine rippt. Die dann erzeugten farbigen Seiten werden anschließend in der schwarz/weiß Druckmaschine an ihre entsprechenden Plätze einsortiert. Zur Durchführung dieses Verfahrens ist es notwendig, dass die ungerippten Daten vorliegen. Außerdem können andere geforderte Eigenschaften des Druckproduktes durch diese Vorrichtung und das beschriebene Verfahren nicht erfüllt werden. Hierfür ist eine händische Sortierung des Druckauftrages und der entsprechenden Medien, auf die gedruckt werden soll, notwendig, um sie den dafür vorgesehenen Druckmaschinen zuzuordnen.

Die Patentanmeldung US 2006/0290979 A1 beschreibt eine Vorrichtung und ein Verfahren zur Verarbeitung von Druckauftragsdaten. Dabei werden Teile von Geräteinformationen von mehreren Druckmaschinen von einem Steuerungsrechner abgefragt, und auf Basis der abgefragten Geräteinformationen und Druckauftragsdaten, welche die zu druckenden Seiten und unterschiedlichen Papierarten enthalten, wird die passende Druckmaschine ausgewählt, welche in der Lage ist, den Druckauftrag ohne Wechsel des Bedruckstoffs während des Druckvorgangs abzuarbeiten. Damit soll die Problematik gelöst werden, dass bei Verwendung eines einzigen Druckers bei Druckaufträgen, welche unterschiedliche Papierarten enthalten, die Druckerkassette mit dem Bedruckstoff häufig ausgewechselt werden muss, was zur entsprechenden Druckverzögerung führt. Die Vorrichtung weist dazu einen Gerätemanager auf, welcher periodisch mit jeder Druckmaschine kommuniziert und entsprechende Geräteinformationen abfragt und verwaltet. Die Druckaufträge sind dabei so aufgebaut, dass den einzelnen Seiten entsprechende Papierarten zugeordnet sind. Diese Daten und Zuordnung werden bei der Abarbeitung des Druckauftrags berücksichtigt, indem die passenden Druckmaschinen ausgewählt werden.

Aus der Patentanmeldung US 2002/0186384 A1 geht ein rechnerbasiertes Verfahren hervor, welches die Druckgeschwindigkeit bei der Abarbeitung eines Druckjobs maximiert. Das Verfahren umfasst die Schritte, Druckseiten des Druckjobs zu erfassen, einen Informationsindex zu den Orten mit den Druckseiten und Druckjobs aufzustellen sowie eine Bestimmung durchzuführen, ob die Seiten im Druckjob bestimmte Kriterien basierend auf den Informationen des Index erfüllen. Weiterhin kommt ein sogenannter Jobsplitter zum Einsatz, welcher den Druckjob in eine Vielzahl von Druckseitengruppen zerlegt, wenn entsprechende Druckseiten des Druckjobs bestimmte Bedingungen erfüllen. Diese Vielzahl von Gruppen von Druckseiten wird dann zu mehreren Druckern gesendet, wobei dies auf den Informationen in dem Index basiert.

Der vorliegenden Erfindung liegt nun die Aufgabe zugrunde, die oben beschriebenen Schwierigkeiten des Standes der Technik zu überwinden.

Diese Aufgabe wird gelöst durch ein Verfahren der oben beschriebenen Gattung nach den Merkmalen des Anspruches 1 und einer Vorrichtung nach Anspruch 6.

Alle im Folgenden genannten Beispiele und Ausführungen, die nicht unter die unabhängigen Ansprüche fallen, sind nicht Teil der Erfindung.

Es wird ein Regelsatz mit wenigstens einer Regel bereitgestellt. Auf Grundlage dieser Regel werden die Referenzobjekte und/oder die von ihnen umfassten Basisobjekte beurteilt und zwar derart, dass eine wahr/unwahr Beziehung zwischen der Regel und einer Eingangsgröße des Referenzobjektes bzw. des Basisobjektes hergestellt werden kann. Die einzelnen Referenzobjekte werden entsprechend der Auswahl durch diese Regel bzw. des gesamten Regelsatzes entsprechend Listen zugeordnet. Diesen abschließenden Listen des Regelsatzes sind Sätze von Ausgangsgrößen zugeordnet. Das Druckprodukt wird dann gemäß diesen Ausgangsgrößen erzeugt.
Bei den Referenzobjekten kann es sich beispielsweise um einen Bogen handeln, der mehrere Seiten als Basisobjekte umfasst. Alternativ ist es auch möglich, dass ein Referenzobjekt eine einzelne Seite ist, die unterschiedliche Dokumentteile umfasst.
Bei der Regel handelt sich um eine Auswahlregel. Sie wählt aus, ob die Eingangsgröße von Referenzobjekten und / oder Basisobjekten dieser Referenzobjekte die Bedingung der Regel erfüllt oder nicht.
Bei den Eingangsgrößen handelt es sich um gewünschte Eigenschaften der Basisobjekte bzw. Referenzobjekte. Gewünschte Eigenschaften können z. B. sein: ein bestimmtes Format einer Seite oder eines gesamten Druckbogens, eine gewünschte Grammatur des Druckbogens oder der von ihm umfassten Seite oder ein farbiges Bild auf einer Druckseite, wobei der Rest des Druckbogens, der diese Seite umfasst, schwarz/weiß gedruckt wird.

Beispielsweise kann die Regel lauten: eine Druckseite umfasst farbige Elemente. Die Druckseite ist dann ein Basisobjekt, welches von einem Bogen als Referenzobjekt umfasst wird. Durch den Regelsatz bzw. die Regel wird dann zum einen eine Liste mit Referenzobjekten, in diesem Fall Bogen, erzeugt, welche der Aussage, ein Basisobjekt, das heißt eine Seite umfasst farbige Elemente, entsprechen und eine zweite Liste, der die Referenzobjekte, das heißt Bogen, zugeordnet werden, die Basisobjekte, das heißt Seiten, umfassen, die keine ausschließlich farbigen Elemente aufweisen. Abschließend wird diesen Listen jeweils ein Satz von Ausgangsgrößen zugeordnet. Als Ausgangsgrößen können hier beispielsweise Druckmaschinen vorgesehen sein, die zum einen farbig drucken können und zum anderen schwarz/weiß drucken, z. B. kann es sich hierbei um Digitaldruckmaschinen mit Farbdruckwerken und einer zweiten digitalen Druckmaschine alleine mit einem schwarz/weiß Druckwerk handeln. Die Druckmaschine mit den farbigen Druckwerken wird dann als Ausgangsgröße der Liste zugeordnet, die Referenzobjekte mit Seiten, die farbige Elemente aufweisen, umfassen, die schwarz/weiß Druckmaschine dann der zweiten Liste. Die einzelnen Referenzobjekte, d. h. Bogen, werden anschließend auf den entsprechenden Druckmaschinen bebildert und dann passend nachbearbeitet, sortiert oder auch geheftet und / oder gefaltet. Es kann auch sein, dass eine Eingangsgröße z. B. ein Format oder eine gewünschte Grammatur einer Seite oder eines Bogens ist. Mit entsprechenden Regeln, die diese gewünschte Eigenschaft der Seite oder des Bogens, das heißt eines Basisobjektes oder eines Referenzobjektes, beurteilen, können jeweils entsprechende Listen mit zugeordneten Bogen erzeugt werden. Diesen Listen sind dann als Ausgangsgrößen z. B. bestimmte Bedruckstoffe zugeordnet, wie Bedruckstoffe mit einer entsprechenden Grammatur. Zusätzlich können als weitere Ausgangsgrößen diesen Listen auch besondere Druckmaschinen zugeordnet sein. Anschließend werden dann die Druckbogen, die auf einem Bedruckstoff mit einer höheren Grammatur erzeugt werden sollen, entsprechend erzeugt.

Erfindungsgemäß ist es weiterhin vorteilhafterweise vorgesehen, dass der Regelsatz wenigstens zwei Regeln umfasst, die aufeinanderfolgend abgearbeitet werden, wobei jede nachfolgende Regel die Eingangsgrößen der Referenzobjekte, die durch die vorangegangenen Regeln einer bestimmten Liste zugeordnet wurden, beurteilt und gemäß der Beurteilung die Referenzobjekte weiteren Listen verzweigend zuordnet, wobei den letzten gemäß des Regelsatzes verzweigten Listen jeweils Sätze von Ausgangsgrößen zugeordnet werden, gemäß derer das Druckprodukt erzeugt wird.

Durch das Abarbeiten von Regeln eines Regelsatzes ist es günstigerweise möglich, Listen von Referenzobjekten zu erzeugen, die jeweils einen ganz speziellen Satz von Eingangsgrößen entsprechen. Es kann sich dabei beispielsweise um Bogen handeln, die einzelne Seiten umfassen, die farbige Elemente aufweisen, wobei die Bogen auf Bedruckstoffen einer besonderen Grammatur gedruckt werden sollen. Eine hierzu verzweigte Liste könnte beispielsweise Bogen umfassen, wobei die Bedruckstoffe vor dem eigentlichen Druck noch auf eine besondere Weise lackiert werden sollen. Eine zweite dazu parallel erzeugte verzweigte Liste würde dann nicht lackierte Bedruckstoffe umfassen, wobei die übrigen Eigenschaften allerdings identisch zur ersten Liste sind. Auf diese vorteilhafte Weise können Listen erzeugt werden, die jeweils Referenzobjekte d. h. Bogen oder Seiten umfassen, die besondere Anforderungen an den Druckprozess stellen. Diese besonderen Anforderungen werden dann in Form von den Ausgangsgrößen den Listen zugeordnet.

In einer besonders vorteilhaften Weiterbildung ist es vorgesehen, dass die Regeln auf der Basis von Eingangsgrößen erzeugt werden können. Auf diese Weise können immer wieder neue Regeln erzeugt werden, wenn neue Eingangsgrößen, has heißt neue gewünschte Eigenschaften der Referenzobjekte oder Basisobjekte, für einen Druckauftrag in Erscheinung treten. Es ist also nicht notwendig, dass alle möglichen Regeln in einem entsprechenden System abgelegt werden müssen. Insbesondere können sich automatisch Regelsätze bilden, die für jede Eigenschaft des Druckprodukts bzw. Teile des Druckprodukts gemäß der in einem Datenfile hinterlegten Information jeweils wenigstens eine Regel enthalten, unabhängig davon, ob diese Eigenschaft dem abarbeitenden System bereits vorher bekannt war. Eine Regel kann dabei insbesondere auch auf mehr als zwei parallele Listen verzweigen.

In einer weiteren vorteilhaften Weiterbildung ist es vorgesehen, dass eine Auswahl von Regeln zur Verfügung gestellt wird, aus dem ein Regelsatz aufgebaut werden kann, der die Referenzobjekte Listen mit gewünschten Sätzen von Ausgangsgrößen zuordnet. Auf diese Weise kann individuell ein Regelsatz erzeugt werden, der an die Bedingungen, z. B. in einem Drucksaal von einem Drucker angepasst ist. Als mögliche Regeln, sind hier bereits hinterlegte Regeln im System vorgesehen, als auch Regeln die gerade erst erstellt wurden. Diese erstellten Regeln können vorteilhafterweise ebenso im System abgelegt werden, wie die ursprünglich schon vorhandenen.

Des weiteren ist es günstigerweise vorgesehen, dass die Listen der zugeordneten Referenzobjekte in der Jobdatei selber gespeichert werden. Dieses kann z. B. in Form eines Job-Data-Format JDF vorgesehen sein.
Dieses kann auf besonders einfache Weise von entsprechenden Datenverarbeitungsanlagen bearbeitet werden.

Vorrichtungsmäßig ist zur Durchführung des Verfahrens ein Jobsplitter vorgesehen, der eine Liste von Referenzobjekten entsprechend eines Regelsatzes aufspaltet. Auf diese Weise werden wenigstens zwei weitere hiervon verzweigte Listen erzeugt. Wie bereits beschrieben kann dieser Regelsatz mehrere Regeln umfassen, die dann in Abhängigkeit von Eigenschaften, das heißt Eingangsgrößen der Basisobjekte bzw. Referenzobjekten, die entsprechende Referenzobjekte bestimmten Listen zuordnet.

Vorteilhafterweise ist es weiter vorgesehen, dass ein Zuordnungsmodul vorhanden ist, welche den Listen Ausgangsgrößen zuordnet. Diese Ausgangsgrößen entsprechen dabei möglichen Ausgangsgeräten oder gewünschten inhaltlichen Eigenschaften des Druckproduktes. Sie werden auf Grundlage der Eingangsgrößen, das heißt der gewünschten Eigenschaften von Basisobjekten der Referenzobjekte bzw. den Eigenschaften der Referenzobjekte selber, den Referenzobjekten einer Liste zugeordnet. Über dieses Zuordnungsmodul erfolgt also eine Zuordnung der Referenzobjekte, das heißt der Bogen oder der Seiten, zu den unterschiedlichen Ausgabegeräten, Druckmaschinen oder weiter verarbeitenden Geräten ebenso wie zu den unterschiedlichen möglichen Bedruckstoffen.

Ein Beispiel des erfindungsgemäßen Verfahrens und der erfindungsgemäßen Vorrichtung, auf welches die Erfindung aber nicht beschränkt ist und aus welchem sich noch weitere erfindungsgemäße Merkmale ergeben, ist in den folgenden Zeichnungen dargestellt.

Es zeigen:
- Fig. 1: einen prinzipiellen Aufbau zum Erstellen eines Regelsatzes,
- Fig. 2: einen Aufbau zur Erstellung von Eingangsgrößen mit anschließender Zuordnung zu Drucksystemen
- Fig. 3: ein Drucksystem gemäß Figur 2,
- Fig. 3a: ein alternatives Drucksystem gemäß Figur 2,
- Fig. 4: eine Liste möglicher Regeln,
- Fig. 5: eine Aufstellung möglicher Regelsätze und
- Fig. 6: eine Aufspaltung eines vorgegebenen Druckobjektes gemäß eines Regelsatzes nach Figur 5 und anschließender Zuordnung zum Drucksystem.

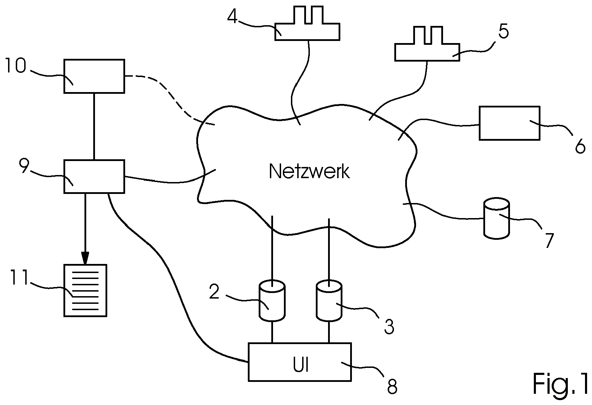

In Fig. 1 ist ein System dargestellt, mittels welchem Regelsätze 11 für eine anschließende Aufgliederung eines Druckjobs erstellt werden können.

Verschiedene verwendbare Druckmaschinen 4, 5, Weiterverarbeitungsmaschinen 6, Datenbanken 2, 3, 7 und mögliche Regelerstellungseinrichtungen 9 und / oder Eingangsgrößen Bereitstellungsorgane 10 sind über ein Netzwerk 1 miteinander verbunden. Bei den Druckwerken 4, 5 kann es sich zum Beispiel um die Gesamtmenge aller in einem Drucksaal bereitgestellten Druckmaschinen handeln, während die Weiterverarbeitungseinrichtungen 6 zum Beispiel eine Auswahl von Weiterverarbeitungseinrichtungen 6 sein können, welche mit in den Druckmaschinen 4, 5 hergestellten Druckerzeugnissen arbeiten können.

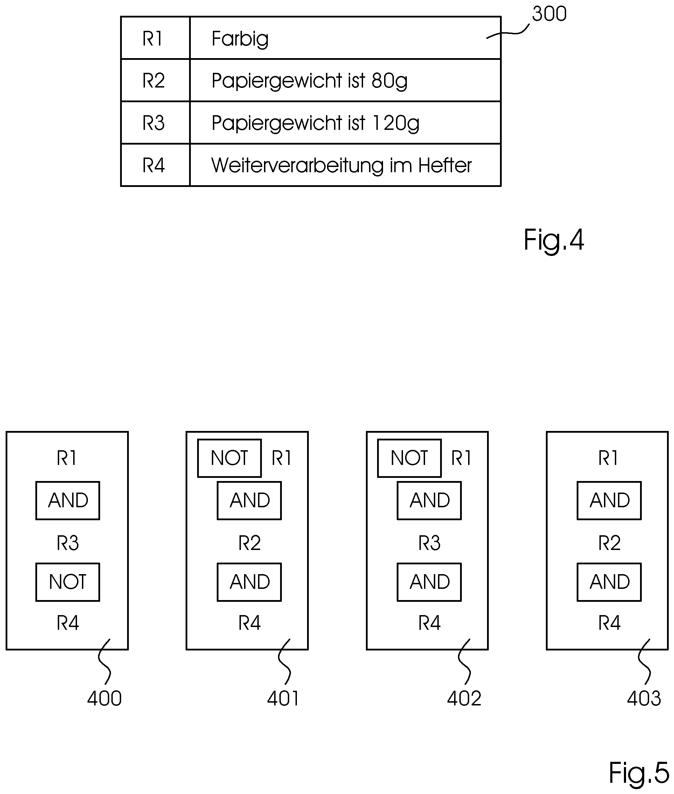

Über die Regeldatenbank 2 kann bereits eine Vielzahl an Regeln, welche sich aus den möglichen Ausgangsgrößen des Druckereibetriebes ergeben, bereitgestellt sein. Solche Regeln R1 bis R4 sind beispielsweise in Figur 4 dargestellt. Bei diesen Ausgangsgrößen handelt es sich um mögliche Eigenschaften von Druckprodukten, welche durch die vorhandenen Mittel im Druckbetrieb erzeugt werden können. Es kann sich dabei um Eigenschaften der Druckmaschinen von Plattenbelichtern, von
Weiterverarbeitungseinrichtungen oder aber auch von Eigenschaften von zur Verfügung gestellten Verbrauchsmitteln handeln. Bei den Verbrauchsmitteln kann es sich z. B. um unterschiedliche Farben, Lacke oder auch Papiersorten handeln.
Die so zur Verfügung gestellten Regeln in der Regeldatenbank 2 können auch für z. B. Verbrauchsmaterialien Platzhalter aufweisen, welche erst bei der tatsächlichen Erstellung der Regelsätze 11 gefüllt werden. Bei diesen Platzhaltern kann es sich zum Beispiel um Eigenschaften des Druckpapieres, wie seine Grammatur, handeln. Die tatsächlichen auswählbaren Grammaturen können dann bei der Erstellung der Regelsätze 11 unter Berücksichtigung der tatsächlichen vorhandenen Papiersorten im Druckereibetrieb ersetzt werden. Hierfür kann insbesondere eine Anbindung einer Datenbank für Verbrauchsmaterialien 7 an das geschilderte Netzwerk 1 vorgesehen sein. Häufig wiederkehrende und zu verwendende komplette Regelsätze können bereits in einer Regelsatzdatenbank 3 hinterlegt sein, so dass ein schneller Zugriff für bekannte Druckerzeugnisse auf die hiermit verbundenen Regelsätze möglich ist. Hierfür können insbesondere Identnummern vorgesehen sein, welche die gespeicherten Regelsätze in der Regelsatzdatenbank 3 mit bereits bekannten Druckprodukten verbindet. Solch eine Identnummer kann auch über die Eingangsgrößen des zu produzierenden Druckproduktes erzeugt werden.

Des Weiteren kann eine Bearbeitungseinrichtung 8 vorgesehen sein, mittels welcher über ein Userinterface (UI) direkt Regeln der Regeldatenbank 2, Regelsätze der Regelsatzdatenbank 3 oder auch resultierende Regelsätze in der Regelsatzerstellungseinrichtung 9 von einem Benutzer manipuliert oder erstellt werden können.
Die Regelsatzerstellungseinrichtung 9 kann über das Netzwerk 1 auf die angeschlossenen Druckmaschinen 4, 5 und Weiterverarbeitungsmaschinen 6 sowie auf die geschilderten Datenbanken 2, 3 und 7 zugreifen. Die Eigenschaften der angeschlossenen Maschinen und Einrichtungen 4, 5, 6 sowie der bereitgestellten Verbrauchsmaterialien in der Datenbank 7 können als Ausgangsgrößen dienen, welche die Möglichkeiten erstellter Regelsätze 11 soweit beschränken, dass nur Druckprodukte erzeugt werden, welche durch Kombinationen dieser den Einrichtungen und Verbrauchsmaterialien zugeordneten Ausgangsgrößen entsprechen.

Es ist weiter ein Eingangsgrößenbereitstellungsorgan 10 mit der Regelsatzerstellungseinrichtung 9 verbunden.

Durch das Eingangsgrößenbereitstellungsorgan 10 werden Eingangsgrößen des zu erzeugenden Druckproduktes bereitgestellt.

Diese Eingangsgrößen bestimmen sich aus den Eigenschaften der unterschiedlichen Bestandteile des Druckproduktes direkt.

Bei den Bestandteilen des zu erzeugenden Druckproduktes kann es sich beispielsweise um unterschiedliche Bogen handeln. Ein Bogen, auf welchem eine Seite mit farbigem Inhalt vorgesehen ist, hat zum Beispiel als Eingangsgröße die Eigenschaft farbig, während ein anderer Bogen, welcher keine Seiten mit farbigen Inhalten aufweist, die Eigenschaft besitzt, nicht farbig oder alternativ scharz-weiß. Somit kann jedem zu erzeugenden Bogen eines Druckproduktes eine Eigenschaft farbig oder nicht farbig zugeordnet werden. Andere Eigenschaften, welche zuordenbar sind, sind zum Beispiel:
Zu verwendendes Finishing-Material,
bestimmtes verwendetes Layout eines Bogens,
Format des Bedruckstoffes,
vorgesehener Widerdruck,
Grammatur des verwendeten Bogens,
zu verwendende Sonderfarben,
Rasterverfahren,
etc.

Aus der Gesamtzahl der Eingangsgrößen eines Druckproduktes ergibt sich eine Beschränkung der möglichen Regelsätze 11, welche in der Regelsatzerstellungseinrichtung 9 erzeugt werden.

Die Regelsatzerstellungseinrichtung 9 erzeugt in Abhängigkeit von den Eingangsgrößenbereitstellungsorgan 10 bereitgestellten Eingangsgrößen und von den möglichen über das Netzwerk 1 bereitgestellten Ausgangsgrößen Regelsätze 11, welche durch einen nachgelagerten Jobsplitter 102 den vorgegebenen Druckjob aufspalten.

Insbesondere können die Regelsätze 11 dabei so erstellt werden, dass sie den genauen Kombinationen von Eingangsgrößen zuzuordnen sind, welche sich aus den einzelnen Teilen des Druckproduktes ergeben.

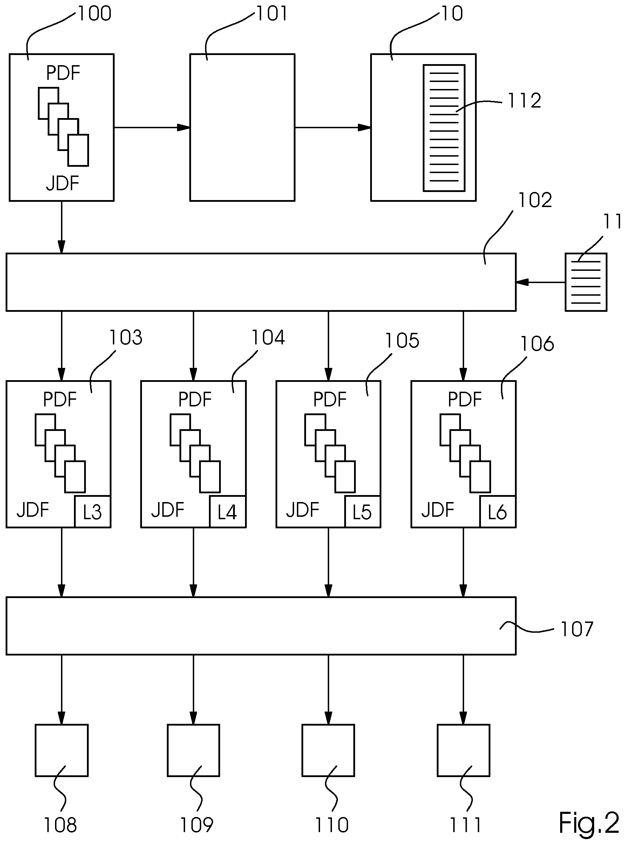

In der Figur 2 ist dargestellt, wie aus Druckjobinfos 100 mit der Anwendung eines Analysewerkzeuges 101 schließlich Eingangsgrößen 112 in dem Eingangsgrößenbereitstellungsorgan 10 bereitgestellt werden.

Bei den Druckjobinfos 100 handelt es sich um eine Datei, welche alle Informationen über die Beschaffenheit des zu erzeugenden Druckproduktes enthält. Diese Datei kann z. B. ein JDF sein oder zumindest umfassen. Außerdem kann ein oder mehrere PDF, welche die Druckvorlagen für das zu erzeugende Druckprodukt umfassen, auch Bestandteil dieser Druckjobinfos 100 sein. Die Druckjobinfos 100 werden einem Analysewerkzeug 101, welches ein Preflighttool sein kann, zugeführt.

Auf Basis der in dem JDF gespeicherten Informationen und den den PDF's zugrunde liegenden Daten bestimmt das Analysewerkzeug 101, auf welchen Seiten bzw. auf welchen Bogen des Druckproduktes welche Eigenschaften notwendig sind. Diese Eigenschaften sind im Allgemeinen direkt im JDF hinterlegt oder können alternativ aus einer weiteren Datenbank herangezogen werden. Aufgrund dieser Analyse des Analysewerkzeuges 101 wird eine Gesamtmenge an möglichen Eigenschaften des zu erzeugenden Druckproduktes erzeugt. Des Weiteren werden Kombinationen dieser Eigenschaften erkannt, welche den einzelnen Bestandteilen des Druckproduktes zugeordnet sind. Auf diese Weise werden einzelne Blöcke an Kombinationen von Eingangsgrößen 112 erstellt, welche zumindest Teilen des Druckproduktes zuzuordnen sind, ohne dass hierbei darauf eingegangen werden muss, welche Seiten des Druckproduktes oder welche Bogen des Druckproduktes Flächenkombinationen an Eingangsgrößen entsprechen. Es kann allerdings einfacherweise auch vorgesehen sein, dass nur die Gesamtmenge aller Eingangsgrößen 112 bestimmt und hinterlegt wird.

Weiter ist in Figur 2 gezeigt, wie die Druckjobinfos 100 mit den Druckvorlagen in Form von PDF's weiterverarbeitet werden.

Die Druckjobinfos 100 werden dafür einem Jobsplitter zugeführt, welcher auf Grundlage der wie beschrieben erzeugten Regelsätze 11 die Druckjobs soweit aufspaltet, dass Listen innerhalb der Druckjobinfos 100 erzeugt werden, welche eine Zuordnung der einzelnen Bestandteile des Druckproduktes zu möglichen Kombinationen der Ausgangsgrößen darstellen. Diese Listen können in Form von Zuordnungstabellen in einem gemeinsamen JDF abgelegt sein. Es ist aber auch möglich, unterschiedliche JDF's bereits an dieser Stelle zu erzeugen. In Figur 2 ist dargestellt, dass auf diese Weise unterschiedliche Jobinformationen 103-106 mit entsprechenden Listen L3-L6 erzeugt werden, durch welche die Druckvorlagen den Kombinationsausgangsgrößen zugeordnet werden. Diese Jobinformationen können in einem gemeinsamen JDF abgelegt sein oder getrennt voneinander weitergegeben werden.

Die so gewonnenen Listen werden einem Zuordnungsmodul 107 zugeführt, welche anhand der Listen die den Listen zugeordneten Druckvorlagen den einzelnen Drucksystemen 108-111 zuordnet. Die Drucksysteme 108-111 sind dabei so bestimmt, dass sie immer genau einer Kombination an Ausgangsgrößen der einzelnen Listen L3-L6 entsprechen.

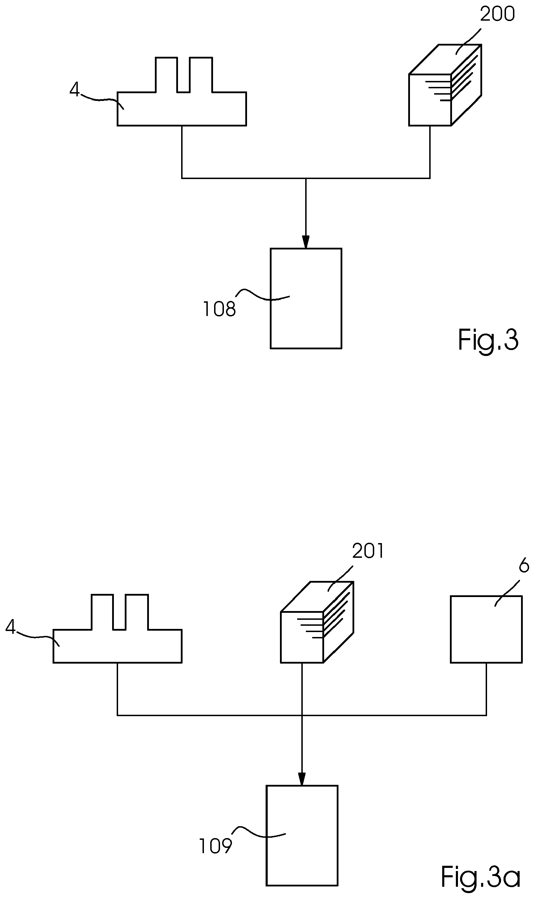

Beispiele für mögliche Drucksysteme 108 - 111 sind in den Figuren 34 und 3a dargestellt.

In der Fig. 3 ist ein Drucksystem 108 gemäß Fig. 2 dargestellt. In diesem Zusammenhang wird ein Drucksystem definiert als die Gruppe der Mittel, die zusammen wenigstens einen Teil des Druckproduktes erstellen. D. h. es besteht aus der Menge von Maschinen, welche Bedruckstoffe für das Druckprodukt bearbeiten und weiterverarbeiten und aus dem Bedruckstoff selber. In dem geschilderten Fall in Fig. 3 ist das Drucksystem 108 dargestellt, welches wenigstens aus einer Druckmaschine 4 und den für ein Teil des Druckproduktes notwendigen Bedruckstoffen mit der Bedruckstoffart 200 besteht. Bei der Druckmaschine 4 kann es sich beispielsweise um eine Zweifarbendruckmaschine handeln, welche die Bedruckstoffart 200 mit einer oder zwei Farben, je nach Vorgabe, bedruckt.

In der Fig. 3a ist ein weiteres Drucksystem 109 dargestellt, welches aus der Druckmaschine 4, einer Bedruckstoffart 201 und der Weiterverarbeitungseinrichtung 6 besteht. Weitere Bestandteile eines Drucksystems können all die Mittel sein, welche Ausgangsgrößen für die Zuordnung gemäß der des Zuordnungsmoduls 107 bereitstellen.

Bei der Bedruckstoffart 201 kann es sich beispielsweise um einen Bedruckstoff handeln, der eine größere Grammatur als die Bedruckstoffart 200 aufweist und die Weiterverarbeitungseinheit 6 kann hier z. B. ein Falzapparat sein.

Wie bereits beschrieben, können zur Erstellung von Regelsätzen 11 in der Regelsatzerstellungseinrichtung 9 bestimmte Regeln R1 bis RN in einer Regeldatenbank 2 bereitgestellt sein, auf welche über ein Netzwerk 1 oder auch direkt zugegriffen werden kann.

Beispiele für solche Regeln sind in Fig. 4 dargestellt.

Die Regel R1 betrifft dabei die Farbigkeit des Teils des Druckproduktes. Über diese Regel wird bestimmt, ob wenigstens ein Teil z. B. eines Bogens farbige Elemente aufweist. Hierdurch kann überprüft werden, ob z. B. eine Seite, welche mit einem Bogen bedruckt werden soll, farbig ist oder ob alle Seiten eines Bogens nicht farbig sind. Bei dem Bogen handelt es sich somit um ein Referenzobjekt, zu dessen Beurteilung bzgl. der Farbigkeit seine Basisobjekte, die einzelnen Seiten, herangezogen werden.

Die Regel R4 betrifft die Weiterverarbeitung in einem Hefter. Hierüber können Teile des Bedruckstoffes, d. h. einzelne Bogen von den Bogen getrennt werden, welche geheftet und welche nicht geheftet werden sollen.

Die Regeln R2, R3 können als eine gemeinsame Regel in der Regeldatenbank 2 hinterlegt sein. Sie betreffen das Papiergewicht, d. h. die Grammatur des zu verwendenden Bedruckstoffes. Insofern die Grammatur eine variable Eigenschaft des Bedruckstoffes ist, welche unterschiedliche Werte einnehmen kann, kann es vorgesehen sein, dass in der Regeldatenbank 2 das genaue Gewicht als Platzhalter bereitgestellt wird und erst in der Regelsatzerstellungseinrichtung 9 dieser Platzhalter mit den Werten, welche sich aus den Eingangsgrößen des Druckproduktes ergeben, gefüllt werden.

In dem hier dargestellten Fall können zwei verschiedene Bedruckstoffarten mit unterschiedlicher Grammatur bereitgestellt werden für die Regel R2 mit einem Papiergewicht von 80 g und für R3 mit einem Papiergewicht von 120 g. Da nur zwei Alternativen vorhanden sind, reichte hier aber nur eine einzelne Regel R2 oder R3 aus. Die Regeln können dafür entsprechend priorisiert sein.

In der Fig. 5 sind Regelsätze 400 bis 403 dargestellt, welche jeweils Teile eines Druckproduktes gemäß den Eingangsgrößen beschreiben.

Der Regelsatz 400 ist aus den Regeln R1, R3 und R4 zusammengebaut. Diese Regeln sind gemäß den Operatoren der Boul'schen Algebra miteinander verknüpft. In den hier dargestellten Fällen werden nur die Operatoren AND und NOT verwendet. Andere Boul'sche Operatoren, wie z. B. OR können natürlich auch Verwendung finden.

Gemäß dem Regelsatz 400 wird ein Teil des Druckproduktes beschrieben, welcher farbig sein soll und ein Papiergewicht von 120 g aufweisen soll und nicht geheftet werden soll.

Der Regelsatz 401 beschreibt einen weiteren Teil des Druckproduktes, welcher nicht farbig, d. h. schwarz-weiß, ist, ein Papiergewicht von 80 g aufweisen soll und für eine Weiterverarbeitung in einem Hefter vorgesehen sein soll.

Der Regelsatz 402 beschreibt einen Teil des Druckproduktes, welches nicht farbig, ein Papiergewicht von 120 g aufweisen soll und in einem Hefter bearbeitet werden soll.

Der Regelsatz 403 beschreibt einen farbigen Bestandteil des Druckproduktes, welcher ein Papiergewicht von 80 g aufweisen soll und für eine Weiterverarbeitung im Hefter vorgesehen sein soll.

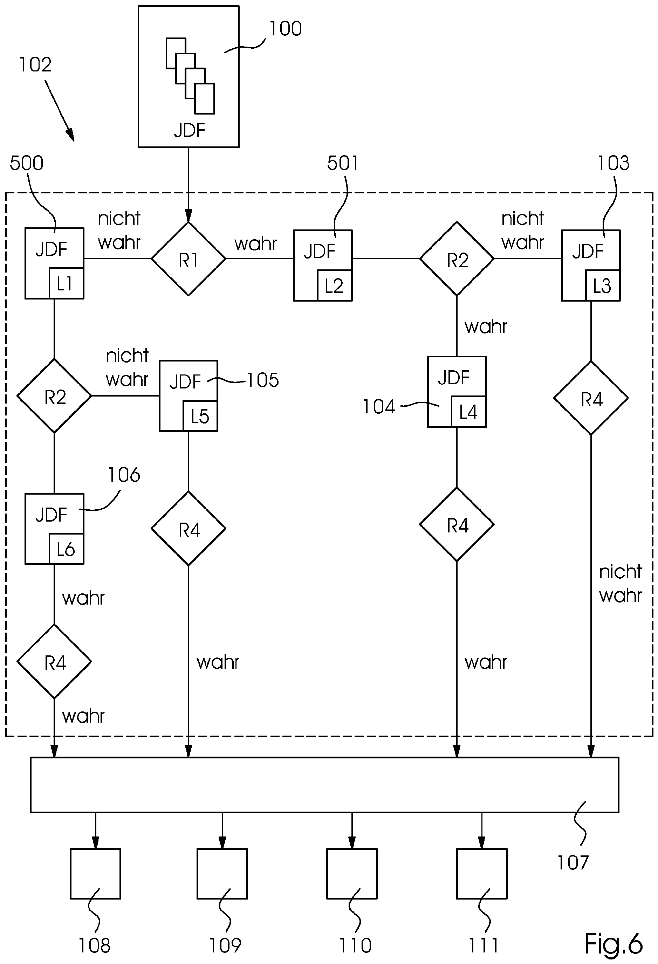

Aus diesen Regelsätzen ergibt sich ein Ablaufdiagramm für das Aufteilen des ursprünglichen Druckjobs innerhalb des Jobsplitters 102 gemäß des Ablaufdiagramms von Fig. 6. Da für jede mögliche Eigenschaft, wie Farbigkeit, Papiergewicht und Weiterverarbeitung immer nur zwei Alternativen zur Verfügung stehen, erübrigen sich Boul'sche Operatoren, wie OR. Der Druckjob 100 wird daher gemäß den Regeln R1, R2 und R4 aufgespalten.

Regeln, die nach der Logik der Regelsätze 400 bis 403 nicht zu einer Aufspaltung des Druckjobs 100 oder von Zwischenjobs 500, 501 mit Listen L1, L2 von Bestandteilen des Druckjobs führen würden bzw. von Bestandteilen des Druckjobs mit Listen L3 bis L4 gemäß den Jobinformationen 103 bis 106 führen würden, können in einer Weiterentwicklung rationalerweise weggelassen werden.

Solche Regeln tauchen immer dann auf, wenn es gemäß den Eingangsgrößen für eine Liste L1 bis L6 nach der Abfrage dieser Regel R1 bis R4 nur eine der Möglichkeiten wahr oder nicht wahr überhaupt gibt. Es käme dann nicht mehr zur Aufspaltung der Liste L1 bis L6, wodurch die Liste nicht weiter aufgespalten wird und somit die Liste L1 bis L6 selber übernommen werden kann, d. h. die Anwendung der Regel R1 bis R4, die nicht zur Aufspaltung einer Liste L1 bis L6 führt, kann auch gleich im Ablauf im Jobsplitter 102 ausgelassen werden. Ein entsprechendes Beispiel wäre hier die Regel R4, wie in Fig. 6 gezeigt.

Wie in der Fig. 6 dargestellt, wird die Druckjobinfo 100 an den Jobsplitter 102 übergeben. Die Druckjobinfo 100 mit der beinhalteten Liste über alle Bestandteile des Druckjobs werden der ersten Regel R1 zugeführt, und gemäß der Entscheidung des Jobsplitters 102 über einen Bestandteil, wie z. B. einen Bogen des Druckjobs 100, der dieser Regel entspricht, d.h. wahr ist, oder nicht entspricht, d. h. nicht wahr ist, wird die ursprüngliche Liste aller Druckjobbestandteile in zwei Teillisten L1, L2 aufgespalten. Hierfür kann im Jobsplitter 102 ein entsprechender Entscheidungsapparat vorgesehen sein.Diese Teillisten werden in der Jobinformation oder in Zwischenjobs 500, 501 mit hinterlegt. Somit sind die Informationen, welche Bestandteile des Druckjobs der Regel R1 entsprechen, abgelegt. Die Zwischenjobs 500, 501 werden dann jeweils weiter einem Entscheidungsapparat gemäß der Regel R2 zugeführt. Auch hier kommt es wieder zu der Entscheidung, ob Bestandteile und wenn, welche Bestandteile den Zwischenjobs 501, 500 der Regel R2 entsprechen oder nicht. Es kommt dann zu entsprechenden Jobinformationen 103 bis 106 mit Listen L3 bis L6, die die die Informationen darüber enthalten, welche Bestandteile des Druckjobs auf welche Weise den Regeln R1, R2 zugeordnet sind. Wie es sich aus den Regelsätzen 400 bis 403 eindeutig ergibt, reicht die Abfrage nach den Regeln R1, R2 eigentlich aus, um eine eindeutige Zuordnung zu diesen Regelsätzen 400 bis 403 der Bestandteile des Druckjobs zuzuordnen.

Die einzelnen Druckjobinfos der Jobinformationen 103 bis 106 können allerdings zur Verdeutlichung noch einem Entscheidungsapparat gemäß der Regel R4 zugeführt werden, wobei gemäß der Logik der Regelsätze 400 bis 403 immer nur ein Ergebnis zu erwarten ist. Die Listen L3 bis L6 werden also nicht aufgespalten.

Da es nur die Alternative R2 und R3 bezüglich des Papiergewichtes gibt, genügt hier eigentlich eine Abfrage gemäß einer der beiden Regeln R2, R3. Zur Vervollständigung könnte allerdings noch die Regel R3 zusätzlich zur Regel R2 eingeführt werden, wobei auch hier keine Aufspaltung zu erwarten ist. Es kann immer nur eine Zugehörigkeit zu R2 oder R3 gehören. Somit kann automatisch bei der Abfrage R2 den Listen L3 bis L6 die Information zugeordnet werden, dass bei der Erfüllung der Regel R2 die Regel R3 nicht erfüllt ist und umgekehrt. Dieses kann auch durch eine zusätzliche Abfrage R3 geregelt werden.

Die nach den Regelsätzen 400 bis 403 erzeugten Jobinformationen 103 bis 106 mit den Listen L3 bis L6 werden dann getrennt oder gemeinsam in einer Jobinformation dem Zuordnungsmodul 107 zugeführt. Aufgrund der Eigenschaften wahr / unwahr der einzelnen Listen P3 bis L6 werden die Listen den Ausgangsgrößen der Drucksysteme 108 bis 111 zugeordnet. Auf diesen Drucksystemen 108 bis 111 können dann automatisch die Bestandteile des Druckprodukts gemäß des Druckjobs 100 nach den Bedürfnissen der einzelnen Bestandteile erzeugt werden.

Bei einem beschreibenden Beispiel kann es sich zum Beispiel um die Produktion eines Druckproduktes in Form einer 32seitigen Broschüre mit einer Auflage von 200 Stück handeln. Diese Broschüre soll sattelgeheftet sein, wobei das Cover der Broschüre in den Farben C, M, Y, K, d. h. farbig auf schwerem Papier, wie 120 g, abgebildet sein soll. Die inneren Seiten sollen auf 80g-Papier gedruckt werden. Alle Seiten sollen schwarz-weiß sein, bis auf die mittlere Seite, welche ein Farbbild aufweisen soll.

Als Ausgangsgrößen stehen eine Offsetdruckmaschine für schwarz-weiß zur Verfügung, eine Digitaldruckmaschine für Farbe, eine Vorrichtung zum Sattelheften und die beiden Druckpapiersorten mit 80 g und 120 g. Aufgrund der zur Verfügung gestellten Druckmaschinen und Weiterverarbeitungseinrichtungen und Bedruckstoffarten sind die Ausgangsgrößen angegeben, wobei diese im Wesentlichen mit den möglichen Eingangsgrößen, Farbigkeit, schwarz-weiß, Sattelheftung, schweres Papier 120 g, leichtes Papier 80 g übereinstimmen.

Mittels eines Preflight-Werkzeuges werden die Druckinformationen für diesen Druckjob analysiert und es wird ermittelt, wie die Eingangsgrößen lauten.

Aufgrund dieser Eingangsgrößen und den zur Verfügung gestellten Ausgangsgrößen wird mittels der Regelsatzerstellungseinrichtung 9 eine Serie von Regelsätzen erzeugt. Als Abfragen ergeben sich hier die Eigenschaften
farbig: ja / nein
Schweres Papier 120 g: ja / nein und
Sattelheftung: ja / nein

Mittels dieser Regelsätze 400 bis 403 wird im Jobsplitter 102 der Druckjob nun in drei Listen aufgespalten:
Liste 1: farbig: nein; schweres Papier: ja; Sattelheftung: Ja
Liste 2: farbig: nein; schweres Papier: nein; Sattelheftung: Ja
Liste 3: farbig: ja; schweres Papier: nein; Sattelheftung: Ja

Gemäß den vorgegebenen Ausgangsgrößen der vorliegenden Drucksysteme werden die Listen 1 bis 3 in einem Zuordnungsmodul 107 dann den Drucksystemen, bestehend aus Druckmaschine, Bedruckstoffart und Weiterverarbeitungseinrichtung, zugeführt.

Die Liste 1 wird den Drucksystemen, bestehend aus einer schwarz-weißen Offsetdruckmaschine plus schwerem Bedruckstoff plus Sattelheftungseinrichtung, zugeführt. Die Liste 2 wird den Drucksystemen, bestehend aus Offsetdruckmaschine plus normales Papier plus Sattelheftung, zugeführt und die Liste 3 wird einer farbigen Digitaldruckmaschine plus normalem Bedruckstoff plus Sattelheftung zugeführt.

Ggf. sind den einzelnen Drucksystemen hier noch RIPs und Plattenbelichter zuzuordnen zur Erzeugung der Rasterbitmap und der Druckform zur Erstellung des abschließenden Bestandteils des Druckproduktes.

Gemäß den Informationen aus den erzeugten Jobinformationen werden dann die Bestandteile des Druckjobs in den Druckmaschinen erstellt und dann gemeinsam dem Sattelhefter zugeführt und entsprechend den Vorgaben aus den Jobinformationen geheftet.

Auf diese Weise kann im Wesentlichen ohne großartige Bearbeitung des Druckjobs durch einen Bediener eine automatische günstige Zuordnung von Teilen des Druckjobs zu entsprechenden Druckmaschinen, Weiterverarbeitungseinrichtungen und entsprechenden Bedruckstoffarten erreicht werden. Diese Informationen können in den JDFs auch den unterschiedlichen Bestandteilen des Druckproduktes mit auf den Weg gegeben werden und einem Bearbeiter über entsprechende User Interfaces oder Anzeigeeinrichtungen zur Unterstützung angezeigt werden.

### Bezugszeichenliste

- 1: Netzwerk
- 2: Regeldatenbank
- 3: Regelsätzedatenbank
- 4,5: Druckmaschine
- 6: Weiterverarbeitungseinrichtung
- 7: Datenbank Verbrauchsmaterialien
- 8: Bearbeitungseinrichtung
- 9: Regelsatzerstellungseinrichtung
- 10: Eingangsgrößenbereitstellungsorgan
- 11: Regelsatz

- 100: Druckjobinfos
- 101: Analysewerkzeug
- 102: Jobsplitter
- 103-106: Jobinformationen mit Listen L3 - L6
- 107: Zuordnungsmodul
- 108-111: Drucksysteme
- 112: Eingangsgröße

- 200, 201: Bedruckstoffart

- 300: Regelliste

- 400, 403: Regelsätze

- 500, 501: Zwischenjobs

## Patentansprüche

1. Verfahren zur Erzeugung eines Druckproduktes gemäß eines Druckauftrages, wobei der Druckauftrag wenigstens ein Referenzobjekt umfasst, das selber wenigstens ein Basisobjekt umfassen kann, wobei wenigstens eine Jobdatei bereitgestellt wird, die Eingangsgrößen umfasst, welche den Basisobjekten und/oder den Referenzobjekten zugeordnet sind und die gewünschte Eigenschaften dieser Referenzobjekte bzw. Basisobjekte beschreiben,
wobei das Referenzobjekt entweder ein Druckbogen ist, der mehrere Seiten als Basisobjekte umfasst, oder dass das Referenzobjekt eine einzelne Seite ist, die unterschiedliche Dokumentteile umfasst,
wobei die gewünschten Eigenschaften der Basisobjekte oder Referenzobjekte ein bestimmtes Format einer Seite oder eines gesamten Druckbogens, eine gewünschte Grammatur des Druckbogens oder der von ihm umfassten Seite ist oder ein farbiges Bild auf einer Druckseite, wobei der Rest des Druckbogens, der diese Seite umfasst, schwarz/weiß gedruckt wird,
**dadurch gekennzeichnet dass** Regelsätze (400, 403) mit wenigstens zwei Regeln (R1, R2, R3, R4) bereitgestellt werden,
diese wenigstens zwei Regeln (R1, R2, R3, R4) die Referenzobjekte Listen (L1, L2, L3, L4, L5, L6) zuordnen,
wofür sie wenigstens eine Eingangsgröße (112) der Referenzobjekte und/oder der von ihnen umfassten Basisobjekte auf der Grundlage einer Wahr/Unwahr-Beziehung beurteilen, dass wenigstens zwei Regeln (R1, R2, R3, R4) aufeinander folgend abgearbeitet werden, wobei jede nachfolgende Regel (R1, R2, R3, R4) die Eingangsgrößen (112) der Referenzobjekte die durch die vorangegangenen Regeln (R1, R2, R3, R4) einer bestimmten Liste (L1, L2, L3, L4, L5, L6) zugeordnet wurden beurteilt und gemäß der Beurteilung die Referenzobjekte weiteren Listen (L1, L2, L3, L4, L5, L6) verzweigend zuordnet, wobei den letzten gemäß der Regelsätze (400, 403) verzweigten Listen (L3, L4, L5, L6) jeweils Sätze von Ausgangsgrößen zugeordnet werden, gemäß derer das Druckprodukt erzeugt wird, wobei Ausgangsgrößen möglichen Ausgangsgeräten und/oder möglichen Bedruckstoffen entsprechen.

2. Verfahren nach Anspruch 1,
**dadurch gekennzeichnet,**
**dass** Regeln (R1, R2, R3, R4) auf der Basis von Eingangsgrößen (112) neu erzeugt werden.

3. Verfahren nach einem der Ansprüche 1 oder 2,
**dadurch gekennzeichnet,**
**dass** eine Auswahl von Regeln (R1, R2, R3, R4) zur Verfügung gestellt wird, aus denen ein Regelsatz (400, 403) aufgebaut werden kann, der die Referenzobjekte Listen (L1, L2, L3, L4, L5, L6) mit gewünschten Sätzen von Ausgangsgrößen zuordnet.

4. Verfahren nach einem der Ansprüche 1 bis 3,
**dadurch gekennzeichnet,**
**dass** die Listen (L1, L2, L3, L4, L5, L6) der zugeordneten Referenzobjekte in der Jobdatei (100) gespeichert werden.

5. Verfahren nach einem der Ansprüche 1 bis 4,
**dadurch gekennzeichnet,**
**dass** die Regeln (R1, R2, R3, R4) eines Regelsatzes (400, 403) in Abhängigkeit der zur Verfügung stehenden Ausgangsgrößen und/oder wirtschaftlichen Überlegungen zusammengestellt werden.

6. Vorrichtung zur Erzeugung eines Druckproduktes gemäß eines Druckauftrages zur Durchführung eines Verfahrens nach einem der vorangegangenen Ansprüche,
aufweisend einen Jobsplitter (102);
wobei der Druckauftrag wenigstens ein Referenzobjekt umfasst, das selber wenigstens ein Basisobjekt umfassen kann, wobei das Referenzobjekt entweder ein Bogen ist, der mehrere Seiten als Basisobjekte umfasst, oder dass das Referenzobjekt eine einzelne Seite ist, die unterschiedliche Dokumentteile umfasst,
**gekennzeichnet dadurch, dass** der Jobsplitter
zur Aufspaltung wenigstens einer Liste (L1, L2, L3, L4, L5, L6) von Referenzobjekten gemäß Regelsätzen (400, 403) in wenigstens zwei weitere verzweigte Listen (L1, L2, L3, L4, L5, L6) ausgeführt ist, wobei die Regelsätze (400, 403) wenigstens zwei Regeln (R1, R2, R3, R4) umfassen, die Basisobjekte die von den Referenzobjekten umfasst werden und/oder Referenzobjekte gemäß einer Wahr/Unwahr-Beziehung beurteilt und die zugehörigen Referenzobjekte entsprechenden Listen (L1, L2, L3, L4, L5, L6) zuordnet,
wobei die Wahr/Unwahr-Beziehungen auf Eingangsgrößen (112) der Basisobjekte bzw. der Referenzobjekte angewandt werden, die die gewünschten Eigenschaften der Basisobjekte bzw. Referenzobjekte beschreiben, wobei die gewünschten Eigenschaften der Basisobjekte oder Referenzobjekte ein bestimmtes Format einer Seite oder eines gesamten Druckbogens, eine gewünschte Grammatur des Druckbogens oder der von ihm umfassten Seite ist oder ein farbiges Bild auf einer Druckseite, wobei der Rest des Druckbogens, der diese Seite umfasst, schwarz/weiß gedruckt wird.

7. Vorrichtung nach Anspruch 6, **gekennzeichnet durch**
ein Zuordnungsmodul (107) zur Zuordnung von Listen (L3, L4, L5, L6) von Referenzobjekten zu Ausgangsgrößen auf Grundlage der Eingangsgrößen von Basisobjekten bzw. Referenzobjekten, denen alle Referenzobjekte einer Liste (L3, L4, L5, L6) entsprechen.

## Claims

1. Method for creating a printed product in accordance with a print job, wherein the print job comprises at least one reference object, which may itself comprise at least one basic object, wherein at least one job file is provided, the job file comprising input variables assigned to the basic objects and/or to the reference objects and describing desired characteristics of the reference objects and/or basic objects,
wherein the reference object is either a print sheet that has multiple pages as basic objects or a single page that comprises multiple document parts,
wherein the desired characteristics of the basic objects or reference objects are a specific format of a page or of an entire print sheet, a desired weight of the print sheet or of the page comprised therein or a coloured image on a print page, wherein the rest of the print sheet comprised on the page is printed in black and white,
**characterized in**
**that** sets of rules (400, 403) including at least two rules (R1, R2, R3, R4) are provided, that the at least two rules (R1, R2, R3, R4) assign the reference objects to lists (L1, L2, L3, L4, L5, L6),
for which purpose, based on a true/untrue relation, they asses at least one input variable (112) of the reference objects and/or of the basic objects comprised therein,
**that** at least two rules (R1, R2, R3, R4) are successively processed, with every subsequent rule (R1, R2, R3, R4) assessing the input variables (112) of the reference objects that have been assigned to a specific list (L1, L2, L3, L4, L5, L6) by the previous rules (R1, R2, R3, R4) and, in accordance with the assessment, assigning the reference objects to further lists (L1, L2 L3, L4, L5, L6) in a splitting way,
wherein the last lists (L3, L4, L5, L6) that were split in accordance with the sets of rules (400, 403) are assigned sets of output variables based on which the printed product is created, wherein output variables correspond to potential output devices and/or potential printing materials.

2. Method according to claim 1,
**characterized in**
**that** rules (R1, R2, R3, R4) are newly created on the basis of input variables (112).

3. Method according to any one of claims 1 or 2,
**characterized in**
**that** a selection of rules (R1, R2, R3, R4) is provided based on which a set of rules (400, 403) may be construed that assigns the reference objects to lists (L1, L2, L3, L4, L5, L6) with desired sets of output variables.

4. Method according to any one of claims 1 to 3,
**characterized in**
**that** the lists (L1, L2, L3, L4, L5, L6) of the assigned reference objects are saved in the job file (100).

5. Method according to any one of claims 1 to 4,
**characterized in**
**that** the rules (R1, R2, R3, R4) of a set of rules (400, 403) are assembled as a function of the available output variables and/or of economic considerations.

6. Device for creating a printed product in accordance with a print job and for implementing a method according to any one of the preceding claims, including a job splitter (102), wherein the print job comprises at least one reference object, which may itself comprise at least one basic object, wherein the reference object is either a print sheet that has multiple pages as basic objects or a single page that comprises multiple document parts,
**characterized in**
**that** the job splitter is designed to split at least one list (L1, L2, L3, L4, L5, L6) of reference objects into at least two further split lists (L1, L2, L3, L4, L5, L6) in accordance with sets of rules (400, 403),
wherein the sets of rules (400, 403) comprise at least two rules (R1, R2, R3, R4) that assess the basic objects that are comprised by the reference objects and/or the reference objects in accordance with a true/untrue relation and assigns the associated reference objects to corresponding lists (L1, L2, L3, L4, L5, L6),
wherein the true/untrue relations are applied to input variables (112) of the basic objects/reference objects that describe the desired characteristics of the basic objects/reference objects, wherein the desired characteristics of the basic objects or reference objects are a specific format of a page or of an entire print sheet, a desired weight of the print sheet or of the page comprised therein or a coloured image on a print page, wherein the rest of the print sheet that is comprised by the page is printed in black and white.

7. Device according to claim 6,
**characterized by**
an assignment module (107) for assigning lists (L3, L4, L5, L6) of reference objects to output variables based on the input variables of basic objects/reference objects to which all reference objects of a list (L3, L4, L5, L6) correspond.

## Revendications

1. Procédé pour la génération d'un produit d'impression selon une tâche d'impression, la tâche d'impression comprenant au moins un élément d'objet de référence qui peut comporter lui-même au moins un objet de base, au moins un fichier de job étant préparé, qui comporte les grandeurs d'entrée, lesquelles sont attribuées aux objets de bases et/ou aux objets de référence et décrivent les propriétés souhaitées de ces objets de référence respectivement de ces objets de base,
l'objet de référence étant soi une feuille imprimée qui comprend plusieurs pages en tant qu'objets de base, ou l'objet de référence étant une page unique qui comprend des parties de documents différentes,
les propriétés souhaitées des objets de base ou des objets de référence étant un format défini d'une page ou de toute une feuille d'impression, un grammage souhaité de la feuille d'impression ou la page entourée par cette dernière ou une image colorée sur une page imprimée, le reste de la feuille d'impression, qui comprend cette page, étant imprimé en noir et blanc,
**caractérisé en ce**
**que** des groupes de règles (400, 403) sont préparées avec deux règles (R1, R2, R3, R4),
au moins ces deux règles (R1, R2, R3, R4) attribuant des listes aux objets de référence (L1, L2, L3, L4, L5, L6), listes qui évaluent au moins une grandeur d'entrée (112) des objets de référence et/ou des objets de base comprises par ces derniers sur la base d'une relation Vrai/Faux,
**qu'**au moins deux règles (R1, R2, R3, R4) sont traitées successivement, chaque règle suivante (R1, R2, R3, R4) évaluant les grandeurs d'entrée (112) des objets de référence, qui ont été associés à une liste définie (L1, L2, L3, L4, L5, L6) par les règles précédentes (R1, R2, R3, R4) et selon l'évaluation les objets de références étant associés par ramification à d'autres listes (L1, L2, L3, L4, L5, L6), les dernières listes ramifiées (L3, L4, L5, L6) étant associées respectivement aux grandeurs de sortie selon les groupes de règles (400, 403), selon lesquelles le produit d'impression est généré, des grandeurs de sortie correspondant à des appareils de sortie possibles et/ou supports d'impression possibles.

2. Procédé selon la revendication 2,
**caractérisé en ce**
**que** des règles (R1, R2, R3, R4) sont à nouveau générées sur la base de grandeurs d'entrée (112).

3. Procédé selon l'une des revendications précédentes 1 ou 2,
**caractérisé en ce**
**qu'**une sélection de règles (R1, R2, R3, R4) est mise à disposition à partir desquelles peut être formé un groupe de règles (400, 403), qui attribue les objets de références à des listes (L1, L2, L3, L4, L5, L6) avec des groupes souhaités de grandeurs de sortie.

4. Procédé selon l'une des revendications précédentes 1 à 3,
**caractérisé en ce**
**que** les listes (L1, L2, L3, L4, L5, L6) des objets de références associés sont stockées dans le fichier de tâche (100).

5. Procédé selon l'une des revendications précédentes 1 à 4,
**caractérisé en ce**
**que** les règles (R1, R2, R3, R4) d'un groupe de règles (400, 403) sont constituées en fonction des grandeurs de sortie disponibles et des considérations économiques.

6. Dispositif pour la génération d'un produit d'impression conformément à une tâche d'impression pour la mise en oeuvre d'un procédé selon l'une des revendications précédentes, présentant
un séparateur de job (102) ;
la tâche d'impression comprenant au moins un objet de référence, qui peut comprendre lui-même au moins un objet de base, l'objet de référence étant soit une feuille qui peut comprendre plusieurs feuilles en tant qu'objet de base, ou l'objet de référence étant une feuille unique qui comprend des parties de document différentes,
**caractérisé en ce que** le séparateur de job est conçu pour séparer au moins une liste (L1, L2, L3, L4, L5, L6) d'objets de référence selon des groupes de règles (400, 403) en au moins deux autres listes ramifiées (L1, L2, L3, L4, L5, L6),
les groupes de règles (400, 403) comprenant aux moins deux règles (R1, R2, R3, R4),
qui évaluent des objets de base contenus dans les objets de référence et/ou des objets de référence selon une relation Vrai/Faux et attribuent les objets de référence associés à des listes correspondantes (L1, L2, L3, L4, L5, L6),
les relations Vrai/Faux étant utilisées sur des grandeurs d'entrée (112) des objets de base respectivement des objets de référence, qui décrivent les propriétés souhaitées des objets de base respectivement des objets de référence, les propriétés souhaitées des objets de base ou des objets de référence étant un format défini d'une page ou de toute une feuille d'impression, un grammage souhaité de la feuille d'impression ou la page entourée par cette dernière ou une image colorée sur une page imprimée, le reste de la feuille d'impression, qui comprend cette page, étant imprimé en noir et blanc.

7. Dispositif selon la revendication 6,
**caractérisé par**
un module d'attribution (107) pour l'attribution de listes (L1, L2, L3, L4, L5, L6) d'objets de référence à des grandeurs de sortie sur la base de grandeurs d'entrée d'objets de base respectivement d'objets de référence dont tous les objets de référence correspondent à une liste (L3, L4, L5, L6).
